# DEMANDE DE BREVET EUROPEEN

(11) **EP 1 246 038 A2**
(43) Date de publication de la demande: **02.10.2002**
(21) Numéro de dépôt: 02290625.9
(22) Date de dépôt: 12.03.2002
(51) Int. Cl.: G05D 23/02

(54) **Dispositif d'obturation d'une conduite d'écoulement d'un fluide**

(30) Priorité: 12.03.2001 FR 0103330
(71) Demandeur: Dura France, 60730 Cauvigny (FR)
(72) Inventeur: Vinot, Jean-Baptiste, 38170 Seyssinet-Pariset (FR)
(74) Mandataire: Casalonga, Axel

(57) **Abrégé**

Dispositif d'obturation d'une conduite d'écoulement d'un fluide, en particulier une conduite d'un circuit de refroidissement d'un moteur de véhicule automobile, comprenant un clapet (3) relié à un organe d'actionnement (4) de façon à déplacer ce clapet par rapport à un siège annulaire (2) entre une position d'obturation dans laquelle des zones annulaires principales (11,12) du clapet et du siège sont en appui l'une sur l'autre, dans lequel ledit siège (2) et ledit clapet (3) présentent des parties auxiliaires (13,14) qui, lorsque le clapet se déplace entre sa position d'obturation et une position intermédiaire d'ouverture, restent en contact l'une sur l'autre et ménagent entre elles au moins un passage (15) d'écoulement du fluide.

## Description

La présente invention concerne un dispositif d'obturation d'une conduite d'écoulement d'un fluide, en particulier une conduite d'un circuit de refroidissement d'un moteur de véhicule automobile.

Dans les circuits d'eau de refroidissement des moteurs des véhicules automobiles, qui comprennent un radiateur extérieur d'échange thermique avec l'air ambiant, il est courant d'installer des clapets qui s'ouvrent et se ferment en fonction de la température de l'eau, sous l'effet d'organes d'actionnement constitués en général par des thermostats à cire. Compte tenu des variations de la température extérieure, il est maintenant courant de prévoir entre le clapet et le siège un espace d'écoulement allant en croissant dans la première partie de la course d'ouverture du clapet afin d'éviter des effets de battement du clapet.

De telles structures sont décrites dans les documents US-A-4,691,861, EP-A-0 716 367 et WO-A-97/11262 dans lesquels les espaces d'écoulement sont en arrière des sièges de clapet par rapport aux sens d'ouverture.

Par ailleurs, on cherche à augmenter la température de fonctionnement des moteurs afin d'augmenter leur rendement, ce qui conduit à une augmentation de la température de l'eau en fonctionnement. Les dispositions constructive ci-dessus deviennent alors insuffisante.

Le but de la présente invention est en particulier d'améliorer les conditions de l'écoulement de l'eau de refroidissement au début de la course d'ouverture du clapet par rapport au siège.

Le dispositif d'obturation d'une conduite d'écoulement d'un fluide, en particulier une conduite d'un circuit de refroidissement d'un moteur de véhicule automobile, comprend un clapet relié à un organe d'actionnement de façon à déplacer ce clapet par rapport à un siège annulaire entre une position d'obturation dans laquelle des zones annulaires principales du clapet et du siège sont en appui l'une sur l'autre.

Selon l'invention, ledit siège et ledit clapet présentent des parties auxiliaires qui sont situées du côté du sens d'ouverture dudit clapet par rapport à leurs zones annulaires principales et ces parties auxiliaires présentent des zones annulaires auxiliaires qui sont distantes de leurs zones annulaires principales et qui, lorsque le clapet se déplace entre sa position d'obturation et une position intermédiaire d'ouverture, restent en contact l'une sur l'autre par déformation au moins de l'une et ménagent entre elles au moins un passage d'écoulement du fluide.

Selon l'invention, au moins l'une desdites parties auxiliaires est de préférence en un matériau élastique et reste en appui sur l'autre partie auxiliaire lorsque le clapet se déplace entre sa position d'obturation et ladite position intermédiaire.

Selon l'invention, l'une desdites parties auxiliaires comprend de préférence une lèvre annulaire formant sa zone annulaire auxilaire et restant en appui sur la zone annulaire auxiliaire de l'autre partie auxiliaire lorsque le clapet se déplace entre sa position d'obturation et ladite position intermédiaire.

Selon l'invention, ladite lèvre annulaire est de préférence déformable élastiquement.

Selon l'invention, au moins l'une desdites parties auxiliaires présente de préférence au moins une encoche (15) traversant sa zone annulaire auxiliaire.

Selon l'invention, ledit clapet et ledit siège présentent entre eux, de préférence, un espace d'écoulement allant en augmentant lorsque le clapet s'éloigne du siège, au moins dans sa course située après ladite position intermédiaire.

Selon l'invention, le siège présente de préférence une partie annulaire en saillie qui est située du côté du sens d'ouverture dudit clapet par rapport à sa zone annulaire principale précitée, ladite partie en saillie du siège comprenant au moins une encoche constituant ledit passage d'écoulement.

Selon l'invention, le clapet comprend de préférence une bague annulaire en une matière élastique présentant sa zone annulaire principale précitée et, à distance de cette zone annulaire principale, une lèvre annulaire périphérique constituant sa zone annulaire auxiliaire précitée.

Selon l'invention, lesdites parties auxiliaires sont de préférence adaptées pour que l'écoulement du fluide entre ledit siège et ledit clapet présente trois phases successives à partir de sa position d'obturation, à savoir une première phase à écoulement réduit au travers dudit passage d'écoulement jusqu'à la position intermédiaire précitée, une seconde phase d'écoulement à croissance réduite lorsque lesdites zones annulaires auxiliaires se séparent et s'éloignent et une phase d'écoulement à croissance rapide.

La présente invention sera mieux comprise à l'étude d'un dispositif d'obturation d'une conduite d'écoulement d'eau, en particulier d'une conduite d'un circuit de refroidissement d'un moteur automobile, décrit à titre d'exemple non limitatif et illustré par le dessin sur lequel :

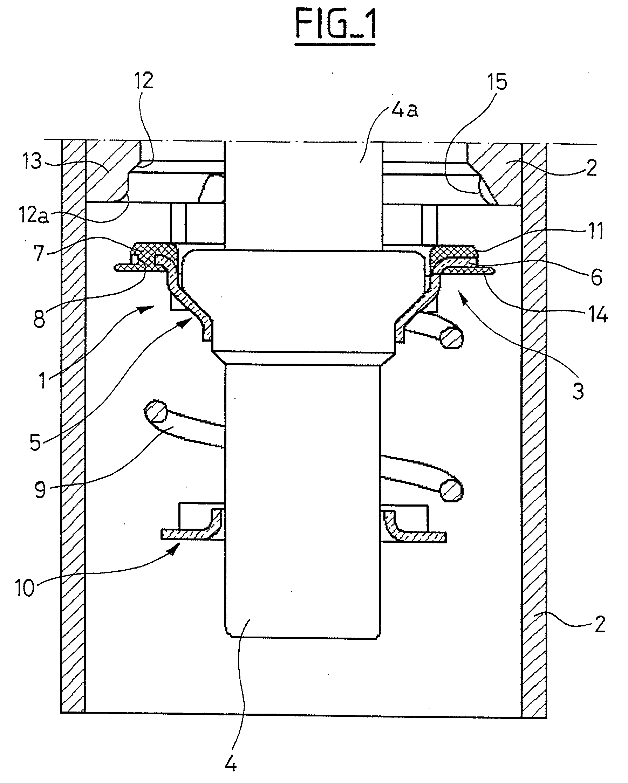

- la figure 1 représente une vue d'ensemble en coupe longitudinale d'un dispositif d'obturation selon la présente invention installé dans une conduite, en position ouverte ;
- la figure 2 représente une coupe longitudinale du dispositif d'obturation de la figure 1 en position fermée ;
- la figure 3 représente une coupe longitudinale du dispositif d'obturation de la figure 1 dans une position intermédiaire d'ouverture ;
- et la figure 4 représente une coupe radiale selon II-II du dispositif d'obturation précité tel qu'il apparaît sur la figure 2.

Le dispositif d'obturation 1 représenté sur les figures est destiné à l'obturation d'une conduite cylindrique 2.

De façon connue en soi, ce dispositif d'obturation 1 comprend, dans la conduite 2, un siège annulaire 2 adjacent à la conduite 2 et un ensemble mobile axialement à cette dernière, constituant un clapet 3 et comprenant un thermostat à cire 4 et une bague 5 qui est traversée et portée par ce themostat 4.

La bague 5 présente une partie périphérique annulaire radiale 6 de part et d'autre de laquelle est surmoulé un anneau 7 en une matière caoutchouteuse, cette partie 6 présentant des orifices traversants 8 à cet effet.

De façon connue en soi, le thermostat comprend une tige longitudinale 4a dont l'extrémité porte sur un appui non représenté et un ressort 9 disposé autour du corps du thermostat 4 agit entre la bague 5 en prenant appui sur l'anneau 7 et un étrier 10, de façon à rapprocher le clapet 3 du siège 2.

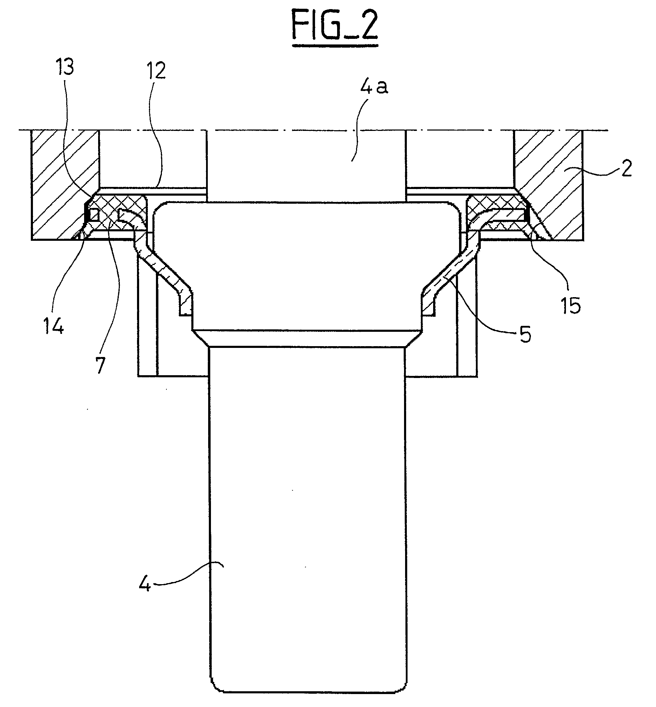

Comme on le voit plus précisément sur la figure 2, lorsque le clapet 3 est à sa position d'obturation, une zone annulaire périphérique principale en forme de chanfrein 11 de l'anneau 7 vient en appui contre une zone annulaire intérieure principale en forme de chanfrein 12 du siège 2.

Comme le montre plus précisément la figure 2, le siège 2 comprend une partie annulaire en saillie 13 qui entoure à distance l'anneau 7 du clapet 3 lorsque ce dernier est à sa position de fermeture. Cette partie annulaire en saillie 13 présente, à distance de la zone annulaire 12 du siège 2, un chanfrein arrondi 12a de telle sorte que, lorsque l'anneau 7 du clapet 3 s'écarte de la zone annulaire 12 du siège 2, l'espace annulaire d'écoulement séparant l'anneau 7 et la partie en saillie 13 augmente.

A l'opposé et à distance de sa zone annulaire 11, l'anneau 7 présente une lèvre annulaire 14 périphériquement en saillie et déformable élastiquement.

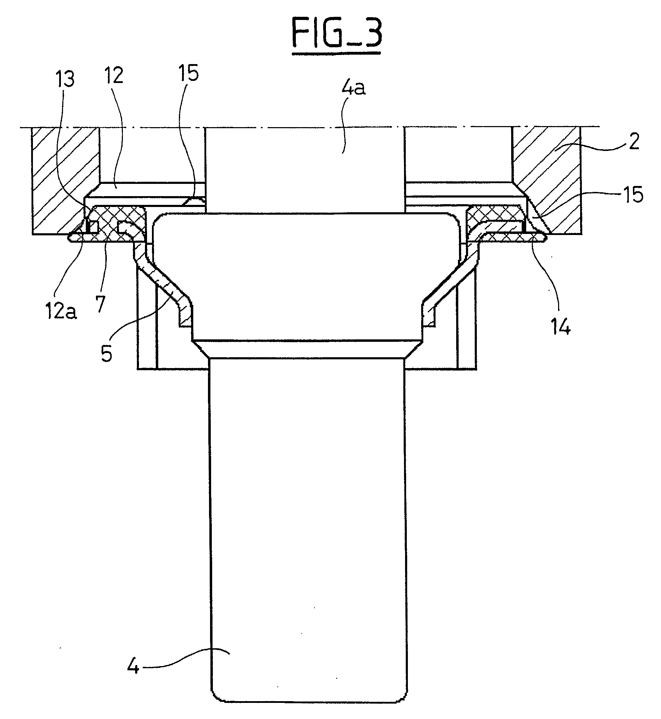

Cette lèvre 14 est destinée à venir et à rester élastiquement en contact, en se déformant, sur la partie en saillie 13 du siège 2 lorsque le clapet 3 se déplace entre sa position d'obturation précitée et une position intermédiaire dans laquelle l'anneau 7 est encore engagé à l'intérieur de la partie annulaire en saillie 13 du siège 2 mais à distance de la zone annulaire 12 de ce siège, comme le montre la figure 3. Ainsi, le siège 2 et le clapet 3 comprennent des zones annulaires auxiliaires déterminées par la partie en saillie 13 et la lèvre 14, distinctes des zones annulaires principales 11 et 12 et situées du côté du sens d'ouverture du clapet 3 par rapport au siège 2.

La partie en saillie 13 du siège 2 présente trois encoches intérieures réparties qui constituent des passages d'écoulement de l'eau lorsque la lèvre 14 de l'anneau 7 est en contact avec la partie en saillie 13 du siège 2.

Le dispositif d'obturation 1 qui vient d'être décrit fonctionne de la manière suivante.

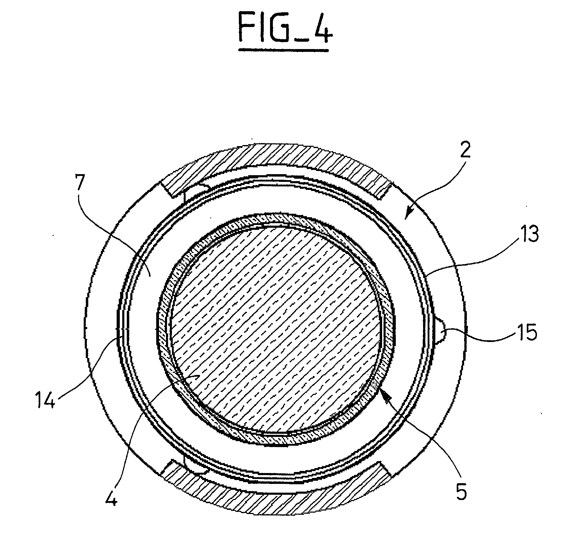

Lorsque la température de l'eau dans la conduite 2, autour du corps du thermostat 4, est inférieure à une valeur déterminée, le clapet 3 est en position d'obturation comme on l'a décrit précédemment et comme représenté sur les figures 2 et 4.

Lorsque la température de l'eau passe au-dessus du seuil ci-dessus et augmente, le corps du thermostat 4 se déplace par rapport à sa tige 4a en écartant progressivement l'anneau 7 du clapet 3 de la zone annulaire 12 du siège 2.

Dans une première partie de la course du clapet 3 déterminée entre sa position d'obturation et sa position intermédiaire précitée, la lèvre 14 de l'anneau 7 reste en contact avec la partie en saillie 13 du siège 2 et une faible quantité d'eau s'écoule au travers des encoches 15.

Lorsque le clapet 3 s'éloigne de sa position intermédiaire précitée, la lèvre 14 de l'anneau 7 du clapet 3 quitte et s'éloigne de la partie en saillie 13 du siège 2 de telle sorte qu'une quantité croissante d'eau s'écoule dans l'espace annulaire croissant précité séparant l'anneau 7 de la partie en saillie 13 du siège 2, tant que cet anneau est encore engagé à l'intérieur de cette partie en saillie annulaire 13.

Lorsque l'anneau 7 s'éloigne de la partie en saillie 13 du siège 2, l'écoulement d'eau tend vers une valeur maximum, au travers du passage annulaire séparant l'anneau 7 du clapet 3 et la conduite 2, le clapet 3 est alors à sa position ouverte.

Lorsque la température de l'eau baisse, les mouvements et les effet du clapet 3 sur l'écoulement de l'eau sont inversés.

Il résulte de ce qui précède que le clapet 3 assure, à partir de sa position d'obturation, trois phases successives d'écoulement de l'eau, à savoir une première phase à écoulement réduit au travers des encoches 15 jusqu'à sa position intermédiaire précitée, une seconde phase d'écoulement à croissance réduite au travers de l'espace annulaire croissant précité à partir de sa position intermédiaire précitée et une phase d'écoulement à croissance rapide jusqu'à sa position d'ouverture totale.

La présente invention ne se limite pas à l'exemple ci-dessus décrit. Bien des variantes de réalisation sont possibles sans sortir du cadre défini par les revendications annexées.

## Revendications

1. Dispositif d'obturation d'une conduite d'écoulement d'un fluide, en particulier une conduite d'un circuit de refroidissement d'un moteur de véhicule automobile, comprenant un clapet relié à un organe d'actionnement de façon à déplacer ce clapet par rapport à un siège annulaire entre une position d'obturation dans laquelle des zones annulaires principales du clapet et du siège sont en appui l'une sur l'autre, **caractérisé par le fait que** ledit siège (2) et ledit clapet (3) présentent des parties auxiliaires (13, 14) qui sont situées du côté du sens d'ouverture dudit clapet par rapport à leurs zones annulaires principales (11, 12) et que ces parties auxiliaires (13, 14) présentent des zones annulaires auxiliaires qui sont distantes de leurs zones annulaires principales (11, 12) et qui, lorsque le clapet se déplace entre sa position d'obturation et une position intermédiaire d'ouverture, restent en contact l'une sur l'autre par déformation au moins de l'une et ménagent entre elles au moins un passage (15) d'écoulement du fluide.

2. Dispositif selon la revendication 1, **caractérisé par le fait qu'**au moins l'une (14) desdites parties auxiliaires est en un matériau élastique et reste en appui sur l'autre partie auxiliaire (13) lorsque le clapet se déplace entre sa position d'obturation et ladite position intermédiaire.

3. Dispositif selon l'une des revendications 1 et 2, **caractérisé par le fait que** l'une desdites parties auxiliaires comprend une lèvre annulaire (14) formant sa zone annulaire auxilaire et restant en appui sur la zone annulaire auxiliaire (13) de l'autre partie auxiliaire lorsque le clapet se déplace entre sa position d'obturation et ladite position intermédiaire.

4. Dispositif selon la revendication 3, **caractérisé par le fait que** ladite lèvre annulaire (14) est déformable élastiquement.

5. Dispositif selon quelconque des revendications précédentes, **caractérisé par le fait qu'**au moins l'une (14) desdites parties auxiliaires présente au moins une encoche (15) traversant sa zone annulaire auxiliaire.

6. Dispositif selon quelconque des revendications précédentes, **caractérisé par le fait que** ledit clapet (3) et ledit siège (2) présentent entre eux un espace d'écoulement allant en augmentant lorsque le clapet s'éloigne du siège, au moins dans sa course située après ladite position intermédiaire.

7. Dispositif selon quelconque des revendications précédentes, **caractérisé par le fait que** le siège présente une partie annulaire en saillie (13) qui est située du côté du sens d'ouverture dudit clapet par rapport à sa zone annulaire principale précitée (12), ladite partie en saillie du siège comprenant au moins une encoche (15) constituant ledit passage d'écoulement.

8. Dispositif selon quelconque des revendications précédente, **caractérisé par le fait que** le clapet (3) comprend une bague annulaire en une matière élastique (7) présentant sa zone annulaire principale précitée (11) et, à distance de cette zone annulaire principale, une lèvre annulaire périphérique (14) constituant sa zone annulaire auxiliaire précitée.

9. Dispositif selon quelconque des revendications précédente, **caractérisé par le fait que** lesdites parties auxiliaires (13, 14) sont adaptées pour que l'écoulement du fluide entre ledit siège (2) et ledit clapet (3) présente trois phases successives à partir de sa position d'obturation, à savoir une première phase à écoulement réduit au travers dudit passage d'écoulement (15) jusqu'à la position intermédiaire précitée, une seconde phase d'écoulement à croissance réduite lorsque lesdites zones annulaires auxiliaires se séparent et s'éloignent et une phase d'écoulement à croissance rapide.
